# DEMANDE DE BREVET EUROPEEN

(11) **EP 3 147 794 A1**
(43) Date de publication de la demande: **29.03.2017**
(21) Numéro de dépôt: 16188277.4
(22) Date de dépôt: 12.09.2016
(51) Int. Cl.: G06F 13/38

(54) **PROCÉDÉ DE TRANSFERT D'INFORMATIONS DE CONFIGURATION D'UN OBJET CONNECTÉ**

(30) Priorité: 28.09.2015 FR 1559102
(71) Demandeur: Orange, 75015 Paris (FR)
(72) Inventeur: BENDIABDALLAH, Halim, 92420 VAUCRESSON (FR); DIJOUX, Geneviève, 75018 PARIS (FR)
(74) Mandataire: Fontenelle, Sandrine

(57) **Abrégé**

Le procédé de transfert d'informations de configuration d'un objet connecté est destiné à être mis en oeuvre par un terminal et comprend :
- une étape (E30) de détection d'une connexion d'une mémoire de masse sur un connecteur de périphérique du terminal ;
- une étape (E40) d'association de ladite mémoire de masse détectée à au moins une information de configuration de l'objet connecté ;
- une étape (E50) d'obtention de ladite au moins une information de configuration ; et
- une étape (E70) de transfert de ladite au moins une information de configuration sur la mémoire de masse.

## Description

### Arrière-plan de l'invention

L'invention se rapporte au domaine général des objets connectés.

Elle concerne plus particulièrement la configuration, c'est-à-dire le paramétrage, d'objets connectés. Aucune limitation n'est attachée à la nature des objets connectés considérés. Il peut s'agir indifféremment d'objets relevant des domaines de l'horlogerie (ex. montre), de la domotique, de la surveillance, des loisirs (ex. vêtements), de la santé (ex. outils de surveillance d'activité ou « activity trackers » en anglais, outils de surveillance du sommeil, pilulier, etc.), des jouets, etc.

On assiste aujourd'hui à une explosion du marché des objets connectés. De façon connue en soi, des tels objets sont reliés au réseau public Internet (on parle d'ailleurs d'Internet des objets) et peuvent communiquer avec d'autres systèmes, comme par exemple un téléphone intelligent (ou « smartphone » en anglais), une tablette numérique tactile, et/ou un ordinateur, pour obtenir ou fournir des informations. Cette communication s'appuie sur une liaison filaire ou sans fil de type Bluetooth™ ou Wi-Fi™. De tels objets peuvent ainsi être configurés pour collecter et stocker des informations en fonction de leur environnement (ex. rythme cardiaque de l'utilisateur pour une montre cardio) ou encore déclencher une action en fonction d'informations recueillies sur le web (ex. arrosage d'un jardin la veille d'une journée de sécheresse). On note que leur vocation première n'est pas d'être des périphériques informatiques ni des interfaces d'accès web ; l'ajout d'une connexion Internet à ces objets permet de leur apporter une valeur supplémentaire en terme de fonctionnalité, d'usage, d'information et/ou d'interaction avec l'environnement. L'interactivité avec ces objets est donc très importante.

Pour utiliser un tel objet connecté, il est nécessaire au préalable de l'initialiser, c'est-à-dire de configurer un certain nombre de paramètres de cet objet propres par exemple à son utilisation (ex. fréquence de collecte et/ou de remontée d'informations, etc.) ou lui permettant de se connecter à d'autres systèmes. A titre illustratif, pour un objet destiné à se connecter à Internet via un réseau Wi-Fi, il s'agit lors de cette phase d'initialisation de fournir à l'objet les moyens de se connecter au réseau Wi-Fi en le paramétrant par exemple avec un login et un mot de passe lui permettant d'accéder au réseau, une clé WEP (pour « Wired Equivalent Privacy » en anglais), etc.

Aujourd'hui pour initialiser un objet connecté, il est généralement nécessaire soit de lancer sur un ordinateur (ou PC pour « Personal Computer » en anglais) un CD-ROM ou un DVD d'installation fourni par le constructeur de l'objet connecté, soit de se rendre sur le site web du constructeur afin de télécharger un logiciel (aussi plus communément désigné par « driver » en anglais) propre à l'objet connecté et adapté au système d'exploitation de l'ordinateur. Ce logiciel, qu'il provienne d'un CD-ROM/DVD ou d'un site web, est installé, une fois téléchargé sur l'ordinateur, au niveau du système d'exploitation de ce dernier. Pour pouvoir utiliser l'objet connecté, il est alors nécessaire d'exécuter le logiciel et de suivre la procédure d'installation et de paramétrage (configuration) de l'objet connecté contenue dans celui-ci.

Toutefois, il convient de constater que la plupart de ces logiciels spécifiques aux objets connectés ne sont disponibles et ne peuvent être téléchargés et exécutés que depuis un ordinateur. Or, les utilisateurs d'objets connectés n'ont pas nécessairement à leur disposition en permanence un tel ordinateur. Ils peuvent notamment ne disposer que d'un terminal mobile tel que par exemple un téléphone intelligent ou smartphone ou encore une tablette numérique tactile.

Actuellement, pour des raisons de sécurité essentiellement, le téléchargement de logiciels spécifiques permettant l'initialisation d'objets connectés n'est pas prévu pour les terminaux mobiles tels que les smartphones ou tablettes numériques. Ces logiciels intervenant en effet à très bas niveau (i.e. au niveau du système d'exploitation), ils représentent un risque trop important en termes de sécurité pour les terminaux mobiles qui sont beaucoup plus vulnérables que les ordinateurs de type PC (i.e. plus sensibles aux virus et autres chevaux de Troie notamment).

Il existe donc un besoin d'une solution permettant de configurer un objet connecté ne présentant pas les inconvénients de l'état de la technique et pouvant être utilisée notamment depuis un terminal mobile.

### Objet et résumé de l'invention

L'invention répond notamment à ce besoin en proposant selon un premier aspect un procédé de configuration d'un objet connecté, destiné à être mis en oeuvre par cet objet connecté et comprenant :
- une étape de connexion de l'objet connecté en tant que mémoire de masse à un connecteur de périphérique d'un terminal ;
- une étape de réception d'au moins une information de configuration en provenance du terminal via ladite connexion ;
- une étape de configuration de l'objet connecté au moyen de ladite au moins une information de configuration.

Corrélativement l'invention vise également un objet connecté comprenant :
- un module de connexion configuré pour connecter ledit objet connecté en tant que mémoire de masse à un connecteur de périphérique d'un terminal ;
- un module de réception d'au moins une information de configuration en provenance du terminal via ladite connexion avec le connecteur de périphérique du terminal ; et
- un module de configuration de l'objet connecté au moyen de ladite au moins une information de configuration.

L'invention concerne aussi, selon un deuxième aspect, un procédé de transfert d'informations de configuration d'un objet connecté, destiné à être mis en oeuvre par un terminal et comprenant :
- une étape de détection d'une connexion d'une mémoire de masse sur un connecteur de périphérique du terminal ;
- une étape d'association de la mémoire de masse détectée à au moins une information de configuration de l'objet connecté ;
- une étape d'obtention de ladite au moins une information de configuration ; et
- une étape de transfert de ladite au moins une information de configuration sur la mémoire de masse.

Corrélativement, l'invention vise un terminal équipé d'un connecteur de périphérique et comprenant :
- un module de détection configuré pour détecter une connexion d'une mémoire de masse sur le connecteur de périphérique ;
- un module d'association configuré pour associer la mémoire de masse détectée à au moins une information de configuration d'un objet connecté ;
- un module d'obtention de ladite au moins une information de configuration ; et
- un module de transfert de ladite au moins une information de configuration sur la mémoire de masse.

Par « mémoire de masse » on entend au sens de l'invention, comme de façon classique en informatique, une mémoire de grande capacité non volatile (c'est-à-dire qu'elle est capable de conserver les informations enregistrées même en l'absence d'alimentation (ex. alimentation électrique)), et qui peut être lue ou écrite par exemple par un ordinateur au sens général du terme (cet ordinateur peut en particulier être un téléphone mobile ou un téléphone intelligent (smartphone)). Des exemples de mémoires de masse connus sont notamment un CD (Compact Disc) ayant une capacité de stockage de 200 à 900 Mo, un DVD (Digital Versatile Disc) ayant une capacité de stockage de 4.7 à 8.5 Go, un disque dur ou encore une clé USB ayant une capacité de stockage de 4 à 128 Go. Toutefois, on note que ces valeurs ne sont données qu'à titre illustratif et que la notion de « grande » capacité de stockage est une notion qui évolue dans le temps. Ainsi, la disquette par exemple a vu sa capacité de stockage évoluer progressivement dans le temps, partant de 160 ko, puis passant à 320 ko, 720 ko, 1.44 Mo jusqu'à 2.88 Mo. De même, les premières clés USB avaient une capacité de stockage allant de 512 Mo jusqu'à 2 Go pour aujourd'hui atteindre plus d'une centaine de Gigaoctets.

Ainsi, l'invention propose une solution simple permettant de configurer un objet connecté par l'intermédiaire d'un terminal quelconque, tel que par exemple un téléphone mobile ou une tablette numérique, sans violer les principes de sécurité inhérents au terminal. Cette solution s'appuie avantageusement sur l'aptitude de l'objet connecté à se connecter au terminal via l'un de ses connecteurs de périphérique (aussi communément appelés connecteur d'entrée/sortie ou connecteur informatique) en émulant une mémoire de masse. Autrement dit, du point de vue du terminal, l'objet connecté est vu comme un périphérique esclave et plus précisément comme une mémoire de masse branchée sur l'un de ses connecteurs de périphérique et sur laquelle le terminal peut venir écrire de façon standard les informations de configuration de l'objet connecté.

De cette sorte, il n'est pas nécessaire d'avoir recours à un driver spécifique à l'objet connecté et au système d'exploitation du terminal pour pouvoir l'initialiser depuis ce dernier. L'invention peut au contraire s'appuyer sur des protocoles de communication classiques entre le terminal et un périphérique connecté sur son connecteur de périphérique. Elle s'applique par ailleurs de façon très avantageuse aux différents systèmes d'exploitation existants pour les terminaux, et en particulier pour les terminaux mobiles aux systèmes d'exploitation Android™ et iOS™ couramment utilisés.

Au niveau du terminal, seul le lien entre la mémoire de masse et les informations de configuration requises pour paramétrer l'objet connecté doit être établi. Ces informations de configuration sont en effet, au moins pour certaines, propres à l'objet connecté et à son utilisation. Ce lien peut être établi par exemple lors de l'étape d'association du procédé de transfert en utilisant un identifiant de la mémoire de masse. Cet identifiant est par exemple le nom de l'objet connecté. De façon connue en soi, cet identifiant est disponible au niveau du terminal dès lors que son système d'exploitation reconnaît qu'une mémoire de masse est connectée à son connecteur de périphérique.

En variante, le lien peut être établi au moyen d'un fichier persistant (i.e. non effaçable) présent dans la mémoire de masse et dans lequel sont contenues des informations relatives à l'objet (et notamment tout ou partie des informations de configuration à obtenir).

Différentes connectiques peuvent être utilisées pour mettre en oeuvre l'invention. En particulier, l'objet connecté peut être connecté sur un connecteur de périphérique de type USB (Universal Serial Bus) ou préférentiellement de type USB OTG (pour « On-The-Go » en anglais).

De façon connue, la norme USB OTG est une extension de la norme USB 2.0 qui permet aux périphériques USB d'avoir davantage de flexibilité dans la gestion des connexions USB. En particulier, grâce à la norme OTG, deux périphériques peuvent s'échanger des données directement sans avoir besoin de passer par un ordinateur hôte. Dans le contexte de l'invention, la norme OTG permet au terminal de basculer en mode « maître » afin que les objets connectés soient reconnus comme des périphériques « esclaves » sur lesquels le terminal peut écrire des données (informations de configuration) pour permettre leur auto-configuration à l'aide de ces données.

Il convient de noter que l'invention, bien que particulièrement avantageuse pour un terminal mobile tel un smartphone ou une tablette numérique, peut également être utilisée avec un ordinateur de type PC. Elle est très simple à mettre en oeuvre en ce qu'elle s'appuie essentiellement sur la prévision d'une connectique de périphérique entre le terminal et l'objet connecté.

Dans un mode particulier de réalisation de l'invention, durant l'étape d'obtention du procédé de transfert, ladite au moins une information de configuration est obtenue via une interface graphique proposée par le terminal.

Cette interface graphique permet notamment à un utilisateur du terminal de saisir des informations nécessaires à la configuration de l'objet connecté (ex. login/mot de passe pour se connecter à Internet, fréquences de relevé de données par l'objet connecté ou autres paramètres propres à l'utilisation de l'objet).

En variante, tout ou partie des informations de configuration peuvent être obtenues par le terminal depuis un réseau local ou distant.

Dans un mode particulier de réalisation, durant l'étape de transfert du procédé de transfert, ladite au moins une information de configuration est transférée sur la mémoire de masse avec une signature numérique ou sous forme chiffrée.

Ce mode de réalisation permet à l'objet connecté de s'assurer que les informations de configuration qui lui sont transmises conformément à l'invention viennent d'un terminal autorisé, et de refuser le transfert de ces informations depuis le terminal si ce n'est pas le cas.

Ainsi, corrélativement, dans ce mode de réalisation dans lequel ladite au moins une information de configuration est reçue par l'objet connecté en provenance du terminal avec une signature numérique ou sous forme chiffrée, le procédé de configuration de l'objet connecté comprend une étape de vérification de la signature numérique ou de déchiffrement de ladite au moins une information de configuration chiffrée conditionnant la mise en oeuvre de l'étape de configuration de l'objet connecté. Notamment, le procédé de configuration peut comprendre en outre une étape, déclenchée en cas d'échec de l'étape de vérification, d'envoi au terminal d'un message d'échec du transfert de ladite au moins une information de configuration.

L'objet connecté étant perçu par le terminal comme une mémoire de masse, un tel message peut prendre par exemple la forme d'un message notifiant une erreur d'écriture sur la mémoire de masse (c'est-à-dire en réalité sur l'objet connecté), et notifiant que la mémoire de masse est pleine et empêchant l'écriture des informations de configuration obtenues par le terminal sur l'objet connecté.

D'autres mécanismes de protection qu'une signature et/ou un chiffrement peuvent bien entendu être mis en oeuvre dans le cadre de l'invention.

Dans un mode particulier de réalisation, le procédé de transfert comprend en outre une étape de suppression de ladite au moins une information de configuration sur la mémoire de masse déclenchée après une configuration de l'objet connecté avec ladite au moins une information de configuration.

Ce mode de réalisation permet de réaliser un gain en termes d'espace de stockage sur l'objet connecté.

Dans un autre mode de réalisation du procédé de transfert, ladite au moins une information de configuration est identifiée par le terminal en utilisant un code porté par l'objet connecté.

Un tel code est par exemple un code QR (ou code matriciel) ou une adresse de type URL (Uniform Resource Locator), destiné à être scanné par le terminal ou transféré par le terminal et qui lui permet par exemple de télécharger automatiquement, c'est-à-dire sans intervention de l'utilisateur du terminal, une application contenant les informations de configuration qui doivent être saisies ou obtenues pour permettre le paramétrage de l'objet connecté. Ceci permet de limiter les actions de l'utilisateur requises pour configurer l'objet connecté. On note que l'application ainsi téléchargée sur le terminal mobile peut comprendre également un pré-paramétrage de tout ou partie des informations de configuration requises pour initialiser l'objet connecté.

Dans un mode particulier de réalisation, les différentes étapes du procédé de transfert et/ou du procédé de configuration sont déterminées par des instructions de programmes d'ordinateurs ou de microprocesseurs.

En conséquence, l'invention vise aussi un programme d'ordinateur ou de micro-processeur sur un support d'informations, ce programme étant susceptible d'être mis en oeuvre dans un terminal ou plus généralement dans un ordinateur, ce programme comportant des instructions adaptées à la mise en oeuvre des étapes d'un procédé de transfert tel que décrit ci-dessus.

L'invention vise également un programme d'ordinateur ou de micro-processeur sur un support d'informations, ce programme étant susceptible d'être mis en oeuvre dans un objet connecté ou plus généralement dans un ordinateur, ce programme comportant des instructions adaptées à la mise en oeuvre des étapes d'un procédé de configuration tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (ou « floppy disc » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un troisième aspect, l'invention vise également un système de configuration d'un objet connecté comprenant :
- un terminal selon l'invention, équipé d'un connecteur de périphérique ;
- un objet connecté selon l'invention, apte à être connecté au connecteur de périphérique pour être configuré.

Le système bénéficie des mêmes avantages décrits précédemment que les procédés de transfert et de configuration et que le terminal et l'objet connecté.

On peut également envisager, dans d'autres modes de réalisation, que le procédé de transfert, le procédé de configuration, le terminal, l'objet connecté et le système de configuration selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de configuration d'un objet connecté conforme à l'invention, dans un mode particulier de réalisation ;
- les figures 2 et 3 illustrent l'architecture matérielle de l'objet connecté et d'un terminal du système de la figure 1 utilisé pour configurer l'objet connecté, dans un mode particulier de réalisation ;
- les figures 4 et 5 illustrent sous forme d'ordinogramme, les principales étapes d'un procédé de transfert et d'un procédé de configuration selon l'invention tels que mis en oeuvre par le système de configuration de la figure 1 ;
- la figure 6 illustre un exemple d'interface graphique pouvant être utilisé dans le contexte de l'invention pour configurer l'objet connecté de la figure 1 ; et
- la figure 7 illustre la liste des disques mémoires vus par le terminal après connexion de l'objet connecté au cours du procédé de transfert selon l'invention.

### Description détaillée de l'invention

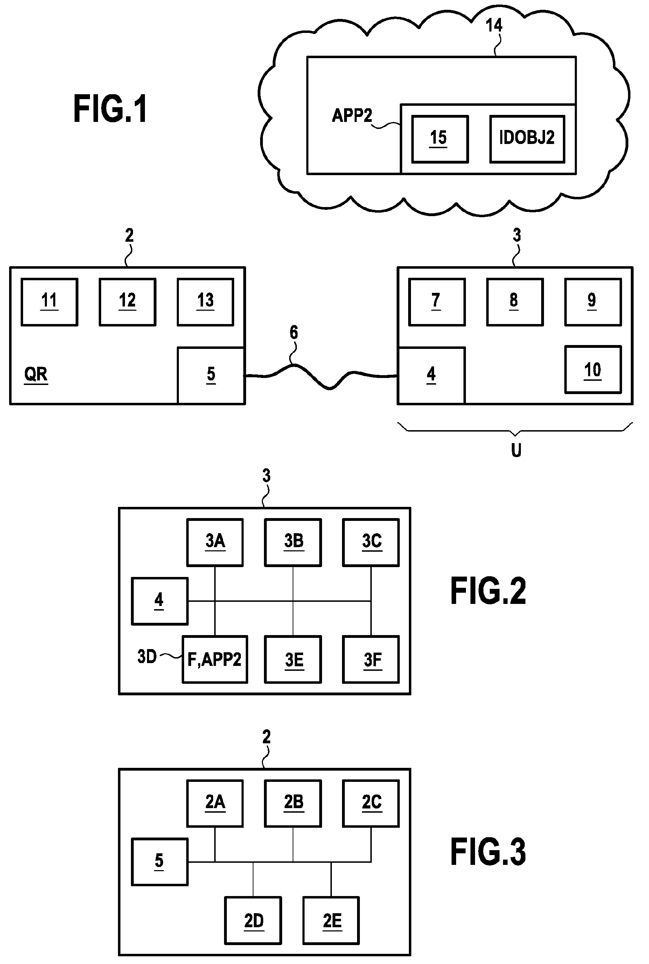

La **figure 1** représente, dans son environnement, un système 1 de configuration conforme à l'invention, dans un mode particulier de réalisation.

Dans l'exemple envisagé à la figure 1, le système de configuration 1 permet la configuration (ou encore le paramétrage voire l'initialisation) par un utilisateur U d'un objet connecté 2 par l'intermédiaire d'un terminal 3. L'objet connecté 2 et le terminal 3 sont conformes à l'invention.

Aucune limitation n'est attachée à la nature de l'objet connecté 2. Il peut s'agir indifféremment d'un objet appartenant au domaine de l'horlogerie (ex. montre), de la domotique, de la surveillance, des loisirs (ex. vêtements), de la santé (ex. outils de surveillance d'activité - ou « activity tracker » en anglais, outils de surveillance du sommeil, pilulier, etc.), des jouets, etc. Un tel objet connecté est, comme mentionné précédemment, destiné à être relié au réseau public Internet et apte à communiquer avec d'autres systèmes (ex. par exemple à une application) pour obtenir ou fournir des informations.

Dans le mode de réalisation décrit ici, le terminal 3 est un terminal mobile, apte à communiquer sur un réseau de télécommunications mobiles comme par exemple un réseau 3G (3^{ème} génération) ou 4G (4^{ème} génération). Ce terminal mobile peut être notamment un téléphone intelligent ou smartphone ou encore une tablette numérique.

En variante, le terminal 3 peut être un terminal fixe, comme par exemple un ordinateur ou PC.

Bien entendu d'autres types de terminaux que les terminaux précités peuvent être utilisés pour mettre en oeuvre l'invention dès lors qu'ils bénéficient d'une connectique appropriée.

Plus précisément, conformément à l'invention, le terminal 3 est équipé d'un (ou de plusieurs) connecteur(s) 4 de périphérique, encore connu(s) sous l'appellation de connecteur(s) d'entrée/sortie ou connecteur(s) informatique(s). Un tel connecteur permet via un câble approprié de relier un équipement périphérique au terminal 3 en le branchant sur ce connecteur de sorte à lui adjoindre des fonctionnalités complémentaires. De tels équipements périphériques sont classiquement des périphériques d'entrée servant à fournir des informations au terminal 3 comme par exemple un clavier, des périphériques de sortie servant à faire sortir des informations du terminal 3 comme par exemple un haut-parleur, un casque, une imprimante, ou des périphériques d'entrée/sortie opérant dans les deux sens comme par exemple une clé de stockage, etc.

Dans le mode de réalisation décrit ici, le connecteur 4 est un connecteur USB OTG (Universal Serial Bus On-The-Go). De façon connue, la norme USB OTG est une extension de la norme USB 2.0 qui permet aux périphériques USB d'avoir davantage de flexibilité dans la gestion des connexions USB. Plus précisément, deux équipements peuvent s'échanger des données en mode maître/esclave directement via cette norme sans avoir besoin de passer par un équipement hôte (ex. ordinateur). Les équipements compatibles avec la norme USB OTG disposent d'un connecteur de type mini-AB ou micro-AB, c'est-à-dire pouvant indifféremment accepter une fiche A (maître) ou B (esclave). Il n'est pas nécessaire que les deux équipements soient tous les deux compatibles avec la norme USB OTG pour communiquer, il suffit que l'un d'entre eux le soit pour établir une connexion point à point entre les deux équipements. Si l'autre équipement ne supporte pas la norme USB OTG, l'équipement la supportant sera alors le maître de la communication. Bien entendu, un équipement compatible avec la norme USB OTG garde la capacité classique de se connecter à un équipement hôte également.

Dans le mode de réalisation envisagé ici, on considère que le terminal 3 et l'objet connecté 2 sont tous les deux compatibles avec la norme USB OTG. Autrement dit, l'objet connecté 2 est également doté d'un connecteur de périphérique 5 de type USB OTG lui permettant, via un câble 6 ou cordon mini-A/mini-B ou micro-A/micro-B d'être relié au terminal 3. Le câble 6 est ainsi branché de part et d'autre sur le connecteur 4 du terminal 3 et sur le connecteur 5 de l'objet connecté 2. Ce câble permet ainsi au terminal 3 et à l'objet connecté 2 de communiquer entre eux, et plus particulièrement dans le cadre de l'invention, il permet la configuration de l'objet connecté 2 par l'intermédiaire du terminal 3, comme détaillé davantage ultérieurement.

On note que dans le cas décrit ici où deux équipements compatibles USB OTG sont envisagés, c'est le type (A/B) du connecteur du câble sur la prise mini-AB (ou micro-AB) à chaque extrémité du câble qui va permettre de désigner lequel des deux équipements va être l'hôte, c'est-à-dire le maître de la communication. Un renversement des rôles maître/esclave peut être envisagé ultérieurement moyennant une étape de négociation entre les deux équipements selon le protocole HNP (pour « Host Negotiation Protocol » en anglais).

La norme USB OTG est connue en soi et n'est pas décrite plus en détail ici. Plus de détails sur cette norme sont disponibles notamment sur les sites web :
http://www.usb.org/developers/onthego/USB_OTG_Intro.pdf et https://fr.wikipedia.org/wiki/USB_On-The-Go

Le recours à des connecteurs de type USB OTG permet ainsi, dans le mode de réalisation décrit ici, au terminal 3 de basculer en mode « maître » et à l'objet connecté 2 d'être reconnu par le terminal 3 comme un périphérique esclave sur lequel il peut venir écrire des données.

En variante, d'autres types de connectiques peuvent être envisagés dès lors qu'elles permettent au terminal 3 de reconnaître l'objet connecté 2 comme un équipement périphérique et offrent un tel mode de communication « maître/esclave » entre le terminal 3 et l'objet connecté 2 pour permettre au terminal 3 d'écrire des données sur l'objet connecté 2. Par exemple, si le terminal 3 est un ordinateur, des connecteurs de type USB peuvent être utilisés pour relier le terminal 3 à l'objet connecté 2, ces connecteurs n'étant pas nécessairement compatibles avec la norme OTG.

Dans le mode de réalisation décrit ici, le terminal 3 a une architecture matérielle identique à celle d'un ordinateur, telle qu'illustrée schématiquement à la **figure 2****.** Outre le(s) connecteur(s) de périphérique 4, il comprend notamment un processeur 3A, une mémoire vive 3B de type RAM (pour « Random Access Memory » en anglais), une mémoire morte 3C de type ROM (pour « Read Only Memory » en anglais), une mémoire non volatile réinscriptible 3D et un module de communication sur un réseau de télécommunications mobile, connus en soi. Le terminal 3 est, par ailleurs, doté de moyens d'entrée/sortie 3F permettant d'interagir avec l'utilisateur U du terminal, comme par exemple un écran, un clavier, un microphone et un haut-parleur, connus en soi.

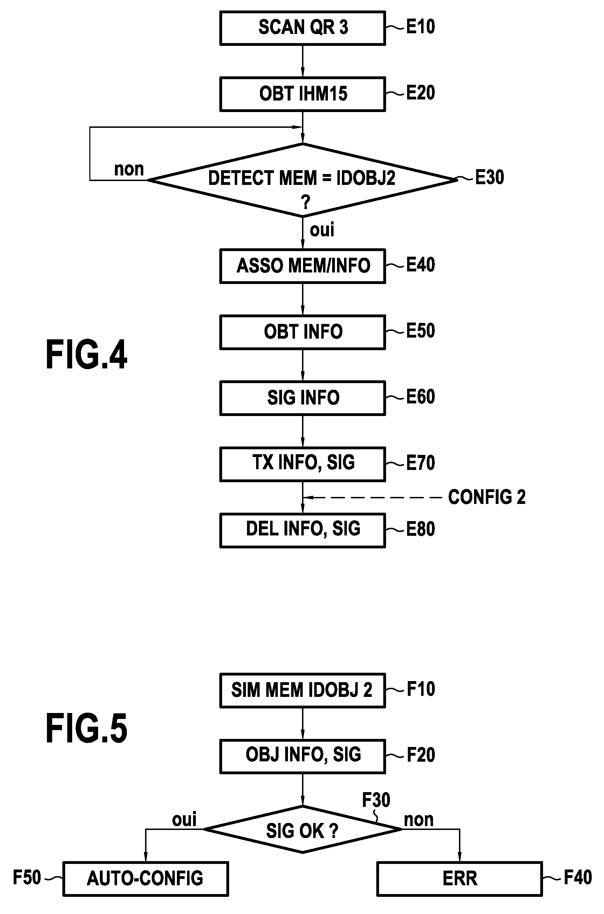

La mémoire morte 3C du terminal constitue un support d'enregistrement conforme à l'invention, lisible par le processeur 3A et sur lequel est enregistré un programme d'ordinateur comportant des instructions pour l'exécution des étapes d'un procédé de transfert selon l'invention. Ce programme d'ordinateur définit de façon équivalente des modules fonctionnels et en tout ou partie logiciels, s'appuyant sur les moyens matériels précités du terminal 3, à savoir plus précisément un module de détection 7 couplé au connecteur de périphérique 4 USB OTG, un module d'association 8, un module d'obtention 9 d'informations de configuration d'objets connectés mettant en oeuvre une interface graphique destinée à s'afficher sur l'écran du terminal 3 et à interagir avec les moyens d'entrée/sortie 3F du terminal 3, et un module de transfert 10 des informations de configuration obtenues via le connecteur de périphérique USB OTG 4. Ces modules sont décrits plus en détail ultérieurement en référence notamment aux figures 4 et 5.

De façon similaire, dans le mode de réalisation décrit ici, l'objet connecté 2 a également l'architecture matérielle d'un ordinateur, telle qu'illustrée schématiquement à la **figure 3****.** Outre le(s) connecteur(s) de périphérique 5, il comprend notamment un processeur 2A, une mémoire vive 2B de type RAM (Random Access Memory), une mémoire morte 2C de type ROM (Read Only Memory), une mémoire non volatile réinscriptible 2D et un module de communication 2E par exemple Bluetooth ou Wi-Fi lui permettant de se connecter au réseau public Internet, connus en soi.

La mémoire morte 2C de l'objet connecté 2 constitue un support d'enregistrement conforme à l'invention, lisible par le processeur 2A et sur lequel est enregistré un programme d'ordinateur comportant des instructions pour l'exécution des étapes d'un procédé de configuration selon l'invention. Ce programme d'ordinateur définit de façon équivalente des modules fonctionnels et en tout ou partie logiciels, s'appuyant sur les moyens matériels précités de l'objet connecté 2, à savoir plus précisément un module de connexion 11 couplé au connecteur de périphérique 4 USB OTG et apte à émuler une mémoire de masse auprès du terminal 3 et à recevoir des informations de configuration de celui-ci et un module d'(auto)configuration 12 de l'objet connecté 2 à partir des informations de configuration reçues. Dans le mode de réalisation décrit ici, le module de configuration 12 est commandé (i.e. activé ou désactivé) par un module de vérification 13 apte à vérifier que les informations de configuration reçues proviennent bien d'un équipement autorisé à participer à la configuration de l'objet connecté 2. Ces modules fonctionnels sont décrits plus en détail maintenant en référence notamment aux figures 4 et 5.

Les figures 4 et 5 décrites maintenant représentent respectivement, sous forme d'ordinogramme, les principales étapes d'un procédé de transfert et d'un procédé de configuration tels qu'ils sont mis en oeuvre par le terminal 3 et par l'objet connecté 2 dans un mode de réalisation de l'invention pour permettre à l'utilisateur U de paramétrer directement l'objet connecté 2 depuis son terminal 3 via le câble USB OTG 6.

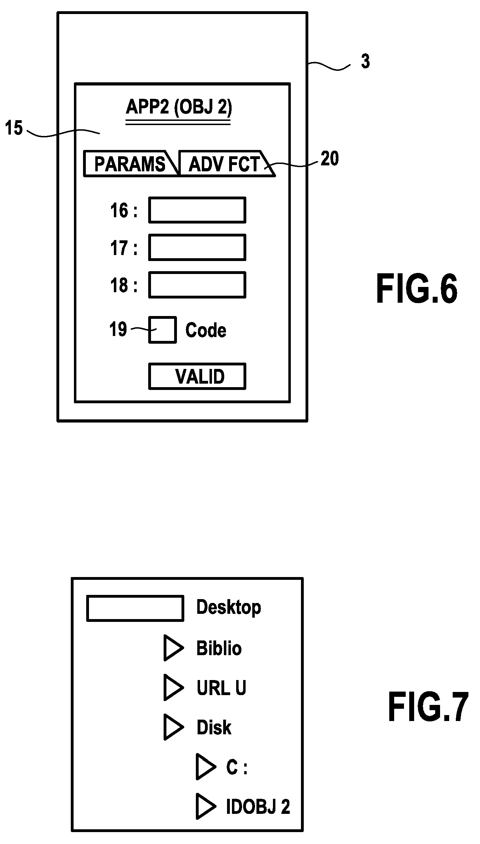

On suppose dans le mode de réalisation décrit ici qu'est présent sur l'objet connecté 2 un code QR représentant une URL permettant d'accéder à un serveur distant 14, par exemple via le réseau public Internet, sur lequel est stocké une application logicielle APP2 propre à l'objet connecté 2. Cette application APP2 fournit une interface graphique destinée à faciliter la configuration de l'objet connecté 2 par l'utilisateur du terminal 3, et notamment la saisie par l'utilisateur des informations de configuration nécessaires pour paramétrer cet objet. Un exemple d'une telle interface graphique 15 est illustré à la **figure 6****,** détaillée ultérieurement.

En variante, d'autres codes qu'un code QR peuvent être portés par l'objet connecté 2, comme par exemple l'URL du serveur distant 14.

Dans l'exemple envisagé ici, on suppose que l'utilisateur U du terminal 3 scanne le code QR porté par l'objet connecté 2 à l'aide de son terminal 3, de façon connue en soi, à l'aide d'une application prévue à cet effet installée préalablement sur le terminal 3 (étape E10). La capture du code QR par le terminal 3 déclenche le téléchargement par ce dernier, via son module de communication 3E et le réseau de télécommunications mobile auquel il est connecté, de l'application APP2 stockée sur le serveur distant 14 (étape E20). L'application APP2 est installée par exemple dans la mémoire non volatile 3D du terminal 3. Elle met en oeuvre tout ou partie des modules fonctionnels du terminal 3 décrits précédemment et est considérée dans la suite de la description comme un élément du terminal 3 à part entière de sorte qu'on parle indifféremment dans la suite de modules de l'application logicielle APP2 ou de modules du terminal 3.

Aucune limitation n'est attachée toutefois à la façon dont le terminal 3 obtient l'application APP2 et l'installe sur son terminal 3 pour bénéficier de l'interface graphique 15.

Dans le mode de réalisation décrit ici, l'application APP2 propre à l'objet connecté 2 comprend en outre un identifiant IDOBJ2 associé à l'objet connecté 2 et aux informations de configuration requises pour cet objet. Cet identifiant IDOBJ2 est utilisé par l'application logicielle APP2 pour scruter les disques mémoires présents et répertoriés sur le terminal 3 et déterminer si la configuration de l'objet connecté 2 peut être réalisée en cas de détection d'un disque portant cet identifiant (étape test E30).

En variante, cet identifiant IDOBJ2 peut être contenu dans le code QR scanné par l'utilisateur U avec son terminal 3 et être utilisé pour paramétrer l'application APP2.

En variante, le lancement de la configuration de l'objet connecté 2 n'est pas initié automatiquement par l'application logicielle APP2 sur détection d'un disque mémoire portant l'identifiant IDOBJ2 mais sur intervention de l'utilisateur U.

On suppose ici que pour permettre la configuration de l'objet connecté 2 depuis son terminal 3, et conformément à l'invention, l'utilisateur U relie l'objet connecté 2 au terminal 3 en branchant le câble 6 de part et d'autre sur les deux connecteurs de périphérique USB OTG 4 et 5.

En référence à la figure 5, suite à ce branchement, le module de connexion 11 de l'objet connecté 2 émule auprès du terminal 3 une mémoire de masse (étape F10). En d'autres mots, l'objet connecté 2 est reconnu suite à ce branchement sur le connecteur de périphérique USB OTG 4 du terminal 3 par le système d'exploitation du terminal 3 (qui joue le rôle du module de détection 7) comme une mémoire de masse (ex. une clé USB), c'est-à-dire comme un disque mémoire sur lequel il est apte à écrire et lire des données via la connexion USB OTG ainsi établie par l'intermédiaire du câble 6. Cette reconnaissance résulte du branchement de l'objet connecté 2 sur le connecteur de périphérique USB OTG 4 du terminal 3 et par différentes transactions répondant à la norme USB OTG entre l'objet connecté 2 et le terminal 3 (i.e. entre l'esclave et le maître), connues en soi. L'objet connecté 2 se déclare notamment durant ces différentes transactions en tant que mémoire de masse auprès du terminal 3.

Le module de connexion 11 de l'objet connecté 2 est en outre configuré pour que la mémoire de masse ainsi émulée auprès du terminal 3 soit identifiée par l'identifiant IDOBJ2. Ainsi, suite au branchement de l'objet connecté 2 sur le terminal 3 via le câble USB OTG 6, le module de détection 7 du terminal 3 détecte la présence d'une mémoire de masse portant l'identifiant IDOBJ2 stocké dans l'application APP2 (réponse oui à l'étape test E30 de la figure 4).

La **figure 7** représente à titre d'exemple les disques mémoires détectés par le système d'exploitation du terminal 3 après connexion de l'objet connecté 2. Parmi ces disques (listés dans la catégorie « disk » sur la figure 7), apparait, en plus du disque C:, une mémoire de masse identifiée par IDOBJ2.

L'application APP2 est informée de cette détection et déclenche en réponse la configuration de l'objet connecté 2 via l'interface graphique 15. Plus précisément, elle sollicite l'utilisateur U par l'intermédiaire de l'interface graphique 15 pour qu'il fournisse les informations de configuration requises pour configurer l'objet connecté 2. Ainsi, le terminal 3 fait le lien entre la mémoire de masse nouvellement détectée (émulée par l'objet connecté 2) et les informations de configuration requises pour l'objet connecté 2 grâce à l'identifiant IDOBJ2 qui est porté d'une part par la mémoire de masse et qui est stocké d'autre part par l'application APP2. C'est cet identifiant IDOBJ2 qui permet à l'application APP2 (et plus précisément au module d'association 8) d'associer à la mémoire de masse nouvelle détectée la ou les informations de configuration requises pour configurer l'objet 2 et qui sont demandées à l'utilisateur U via l'interface graphique 15 (étape E40).

En variante, le lien entre la mémoire de masse détectée par le terminal 3 et les informations requises pour l'objet connecté 2 peut être établi au moyen d'un fichier persistant (i.e. non effaçable) présent dans la mémoire de masse et dans lequel sont contenues des informations relatives à l'objet (et notamment tout ou partie des informations de configuration à obtenir).

La figure 6 illustre des exemples d'informations de configuration requises via l'interface graphique 15. Elles comprennent selon cet exemple des données destinées à permettre à l'objet connecté 2 de se connecter à un réseau local, ces données comprenant ici une clé WEP 16, un nom 17, un prénom 18 et l'indication 19 de la présence ou non d'un mot de passe pour se connecter. On note par ailleurs que dans l'exemple illustré à la figure 6, d'autres informations de configuration sont requises auprès de l'utilisateur U correspondant aux informations requises pour permettre la configuration des fonctionnalités mises en oeuvre par l'objet connecté (item 20 sur l'interface graphique 15).

La saisie et la validation de ces diverses données par l'utilisateur U via les moyens d'entrée/sortie 3F du terminal 3 permettent l'obtention par le module d'obtention 9 de l'application APP2 des informations de configuration requises pour configurer l'objet 2 (étape E50).

Bien entendu, l'exemple représenté à la figure 6 n'est donné qu'à titre illustratif. D'autres informations de configuration peuvent être envisagées. En outre, ces informations de configuration peuvent être obtenues en une ou plusieurs interactions avec l'utilisateur U.

En variante, des informations de configuration peuvent être obtenues également d'autres entités que de l'utilisateur U, via par exemple une communication avec ces entités par l'intermédiaire d'un réseau local ou distant.

Dans le mode de réalisation décrit ici, les informations de configuration ainsi obtenues par le terminal 3 sont stockées au fur et à mesure de leur obtention dans un fichier de configuration F mémorisé dans la mémoire non volatile 3D du terminal.

Puis, l'application APP2 génère une signature numérique SIG à partir des informations de configuration contenues dans le fichier F, de façon connue en soi (étape E60). Une telle signature numérique permet de façon connue de garantir l'intégrité de données électroniques et d'en authentifier l'auteur (à savoir le terminal 3 ici). Elle peut être générée selon une méthode classique de chiffrement asymétrique à partir d'une fonction de hachage et d'une clé de chiffrement privée stockée par l'application APP2, l'objet connecté 2 possédant la clé publique de chiffrement associée à cette clé privée.

L'application APP2, par l'intermédiaire du module de transfert 10, transfère ensuite les informations de configuration contenues dans le fichier F et la signature numérique SIG ainsi générée à la mémoire de masse émulée par l'objet connecté 2 (étape E70) via la connexion USB OTG établie par le câble 6. A cet effet, le module de transfert 10 écrit les informations de configuration du fichier F et la signature numérique SIG sur la mémoire de masse identifiée par l'identifiant IDOBJ2 de façon standard comme le permet la norme USB OTG, c'est-à-dire comme sur n'importe quelle clé USB ou disque distant qui serait connecté(e) au terminal par l'intermédiaire du connecteur de périphérique 4 USB OTG. En transférant ainsi les informations de configuration à la mémoire de masse identifiée par IDOBJ2, le module de transfert 10 du terminal 3 transfère (notamment, écrit) les informations de configuration à l'objet connecté 2.

Dans un autre mode de réalisation, le transfert des informations de configuration obtenues par le module d'obtention 9 peut être réalisé au fil de l'eau, sans stockage préalable dans un fichier dans la mémoire non volatile 3D, mais au fur et à mesure de leur obtention via par exemple l'interface graphique 15.

Dans un autre mode de réalisation encore, les informations de configuration peuvent être chiffrées avant leur transfert vers l'objet connecté 2. D'autres moyens de prouver l'intégrité de ces informations et leur auteur peuvent être envisagés de façon alternative.

En référence à la figure 5, le module de connexion 11 de l'objet connecté 2, couplé au connecteur de périphérique 5, reçoit les informations de configuration transférées par le terminal 3 via le câble USB OTG 6 et la signature numérique SIG associée (étape F20).

La conformité de la signature numérique SIG est alors vérifiée par le module de vérification 13 de l'objet connecté 2 de façon connue en soi et à l'aide de la clé de chiffrement publique dont il dispose (étape test F30).

Si la signature numérique SIG n'est pas conforme (réponse non à l'étape test F30), le module de connexion 11 rejette les informations de configuration transmises par le terminal 3 (étape F40). A cet effet, le module de connexion 11 émulant une mémoire de masse auprès du terminal 3 il émet à destination de celui-ci un message notifiant le terminal 3 de l'échec du transfert comme par exemple un message d'erreur d'écriture (tel que le message « Write Error » en anglais) ou de mémoire pleine tel que ceux prévus par la norme USB.

Si la signature numérique SIG est valide (réponse oui à l'étape test F40), le module de configuration 14 procède à la configuration de l'objet connecté 2 avec les informations de configurations reçues du terminal 3 (étape F50). Cette étape comprend par exemple la mise à jour du micrologiciel ou firmware de l'objet connecté 2 avec les informations de configuration ainsi obtenues.

Dans le mode de réalisation décrit ici, une fois cette configuration réalisée, le terminal 3 en est informé et le module de transfert 10 du terminal 3 supprime les informations de configuration et la signature numérique SIG de la mémoire de masse émulée par l'objet connecté 2 (étape E80). Cette étape est toutefois optionnelle.

L'invention permet ainsi une (auto-)configuration de l'objet connecté 2 par l'intermédiaire d'un terminal quelconque et notamment d'un terminal mobile.

## Revendications

1. Procédé de transfert d'informations de configuration d'un objet connecté (2), destiné à être mis en oeuvre par un terminal (3) et comprenant :
- une étape (E30) de détection d'une connexion d'une mémoire de masse sur un connecteur de périphérique (4) du terminal ;
- une étape (E40) d'association de ladite mémoire de masse détectée à au moins une information de configuration de l'objet connecté ;
- une étape (E50) d'obtention de ladite au moins une information de configuration ; et
- une étape (E70) de transfert de ladite au moins une information de configuration sur ladite mémoire de masse.

2. Procédé selon la revendication 1 dans lequel ledit connecteur de périphérique (4) est un connecteur USB (Universal Serial Bus) ou USB OTG (On-The-Go).

3. Procédé selon la revendication 1 ou 2 dans lequel durant l'étape (E50) d'obtention, ladite au moins une information de configuration est obtenue via une interface graphique (15) proposée par le terminal et/ou depuis un réseau de télécommunications local ou distant.

4. Procédé selon l'une quelconque des revendications 1 à 3 dans lequel l'étape (E40) d'association utilise un identifiant (IDOBJ2) de la mémoire de masse.

5. Procédé selon l'une quelconque des revendications 1 à 4 comprenant en outre une étape (E80) de suppression de ladite au moins une information de configuration sur ladite mémoire de masse déclenchée après une configuration de l'objet connecté avec ladite au moins une information de configuration.

6. Procédé selon l'une quelconque des revendications 1 à 5 dans lequel ladite au moins une information de configuration est identifiée par le terminal en utilisant un code (QR) porté par l'objet connecté.

7. Procédé de configuration d'un objet connecté (2), destiné à être mis en oeuvre par ledit objet connecté et comprenant :
- une étape (F10) de connexion de l'objet connecté en tant que mémoire de masse à un connecteur de périphérique (4) d'un terminal (3) ;
- une étape (F20) de réception d'au moins une information de configuration en provenance du terminal via ladite connexion ;
- une étape (F50) de configuration de l'objet connecté au moyen de ladite au moins une information de configuration.

8. Procédé selon la revendication 7 dans lequel ladite au moins une information de configuration est reçue en provenance du terminal avec une signature numérique (SIG) ou sous forme chiffrée, ledit procédé comprenant une étape de vérification (F30) de ladite signature numérique ou de déchiffrement de ladite au moins une information de configuration chiffrée conditionnant la mise en oeuvre de l'étape de configuration de l'objet connecté.

9. Procédé selon la revendication 8 comprenant une étape (F40), déclenchée en cas d'échec de l'étape de vérification, d'envoi au terminal d'un message d'échec du transfert de ladite au moins une information de configuration.

10. Programme d'ordinateur comportant des instructions pour l'exécution des étapes du procédé de transfert selon l'une quelconque des revendications 1 à 6 ou du procédé de configuration selon l'une quelconque des revendications 7 à 9 lorsque ledit programme est exécuté par un ordinateur.

11. Support d'enregistrement lisible par un ordinateur sur lequel est enregistré un programme d'ordinateur comprenant des instructions pour l'exécution des étapes du procédé de transfert selon l'une quelconque des revendications 1 à 6 ou du procédé de configuration selon l'une quelconque des revendications 7 à 9.

12. Terminal (3) équipé d'un connecteur (4) de périphérique et comprenant :
- un module de détection (7) configuré pour détecter une connexion d'une mémoire de masse sur ledit connecteur de périphérique ;
- un module d'association (8) configuré pour associer la mémoire de masse détectée à au moins une information de configuration d'un objet connecté (2) ;
- un module d'obtention (9) de ladite au moins une information de configuration ; et
- un module de transfert (10) de ladite au moins une information de configuration sur ladite mémoire de masse.

13. Terminal selon la revendication 12 apte à communiquer sur un réseau de télécommunications mobiles.

14. Objet connecté (2) comprenant :
- un module de connexion (11) configuré pour connecter ledit objet connecté en tant que mémoire de masse à un connecteur de périphérique (4) d'un terminal (3) ;
- un module de réception (11) d'au moins une information de configuration en provenance du terminal via ladite connexion avec le connecteur de périphérique du terminal ; et
- un module de configuration (12) de l'objet connecté au moyen de ladite au moins une information de configuration.

15. Système de configuration d'un objet connecté comprenant :
- un terminal (3) selon la revendication 12 ou 13, équipé d'un connecteur de périphérique (4) ;
- un objet connecté (2) selon la revendication 14, apte à être connecté au connecteur de périphérique pour être configuré.
